# EUROPEAN PATENT APPLICATION

(11) **EP 4 806 673 A1**
(43) Date of publication of application: **16.09.2026**
(21) Application number: 25162899.6
(22) Date of filing: 11.03.2025
(51) Int. Cl.: B60C 29/00, B60C 29/02

(54) **VALVE FOR TUBELESS TIRES**

(71) Applicant: Golec, Marcin, London SW19 2RR (GB)
(72) Inventor: Golec, Marcin, London SW19 2RR (GB)
(74) Representative: Farago-Schauer, Peter Andreas

(57) **Abstract**

The present invention pertains to a valve (100) for tubeless tires comprising: a valve body (1) having a distal open end (5), a proximal open end (22), an internal channel (18) extending between the distal open end (5) and the proximal open end (22), and a valve seat (12) at the proximal open end (22); and a valve stem (3) extending slidingly through the internal channel (18) in the assembled state of the valve (100), the valve stem (3) comprising a stem head (6) at a valve stem distal end (32), a valve plug (14) at a valve stem proximal end (13) and cooperating with the valve seat (12) to close the valve (100) under the effect of pressure within a tire (41), and a valve stem shaft (31) extending between the valve stem distal end (32) and the valve stem proximal end (13), wherein the stem head (6) is enlarged as compared to the valve stem shaft (31) and the valve plug (14) is enlarged as compared to the valve stem shaft (31), wherein both the stem head (6) and the valve plug (14) are sized such as not to be insertable into the internal channel (18), wherein the valve stem shaft (31) is devised with an axial length such that the valve stem shaft (31) is held slidingly with an axial play in the internal channel (18) between the distal open end (5) and the proximal open end (22) and is prevented from being separated from the valve body (1) in the assembled state of the valve (100), and wherein the stem head (6) is free of threads. The present invention also pertains to methods for assembling the above valve (100).

## Description

### BACKGROUND OF THE INVENTION

The present invention is directed at an improved valve for tubeless tires. Further, the present invention is also directed at methods for assembling an improved valve for tubeless tires.

### BACKGROUND ART

Valves for use on pneumatic tires are well-known in the art. One such valve is described in US 1139585 A. The valve comprises a cylindrical valve housing with a radially extended disk at its lower end forming a valve seat and a valve stem with a radially extending disk at its lower end and an upwardly projecting flange. The radially extending disk is provided with a body rubber which forms the gasket or packing disk of the valve and which seals the lower part of the valve stem against the valve seat. The upwardly projecting flange is provided with a thread such that when the tire is inflated and the valve is in use, a nut or cap provided at the upper end of the cylindrical valve housing may be rotated thereby drawing the valve seat upwardly by reason of the engagement of the thread of the upwardly projecting flange with an internal thread of the nut or cap. This arrangement is however cumbersome and not free from shortcomings in view of the relatively large number of interacting mechanical parts. Also the handling of the valve is complex as it requires the additional operation of threading the nut or cap to close the valve.

A similar valve is disclosed by US 1353415 A, wherein the valve stem is equally provided at its upper end with a thread cooperating with an internal thread of a cap or nut. When the cap or nut is properly manipulated, the valve stem and parts carried thereby can be drawn upwardly with respect to a valve body and a valve seat provided on the valve body, thereby providing an airtight joint between the valve seat and the valve stem.

A valve for a tubeless tire is known from US 10926591 B2. The known valve is configured such that normal operation of the wheel (e.g. , riding the host bicycle) and selected deflation of the tire via the valve are both facilitated while a cap is installed and covering the distal end of the valve stem. The cap includes internal threads which are configured to mate with a threaded end of the valve stem. The cap may be placed in a first position configured to "lock" the valve closed (i.e., with the valve fully seated). In this position, the cap is screwed fully onto the threads of the threaded end of the valve stem such that the valve stem may not be pressed or otherwise moved toward the proximal end of the valve. In this position, the valve is closed and there is no air flow through the valve. The cap may be placed in a second position by partially unscrewing the cap from the threaded end of the valve stem, such that the cap remains attached to the threaded end of the valve stem, but the cap no longer abuts against the distal end of the valve body. In this position, the valve, if installed in the tire, is still closed due to the force exerted by air pressure within the tire, but the valve stem is free to move along its long axis. To open the valve, the cap may be pressed toward the proximal end of the valve, moving the valve stem by a corresponding distance due to the mating connection between the cap and the stem. A resilient seating surface of the valve stem may be unseated and moved away from a valve seat, allowing air to exit the tire through the resulting opening. The axial travel of the valve stem is limited by a slot provided therein with a pin of the valve body. The latter arrangement of US 10926591 B2 is equally cumbersome and not free from shortcomings in view of the relatively large number of interacting mechanical parts. Also the handling of the valve is complex as it requires the additional operation of threading the nut or cap to close the valve.

Accordingly, it is an object of the present invention to provide an improved valve for tubeless tires which avoids the foregoing shortcomings.

Within the above object, it is a further aim of the present invention to provide for an improved valve for tubeless tires that has a reduced number of components.

A further particular aim of the present invention is to provide for an improved valve for tubeless tires which is simple to manufacture and can be manufactured at relatively low costs.

Yet another particular aim of the present invention is to provide for an improved valve for tubeless tires which is lightweight and which avoids metallic parts or aluminum parts.

An additional particular aim of the present invention is to provide for an improved valve for tubeless tires which facilitates air flow into and out of a tire both when inflating and when deflating the tire.

Yet an additional particular aim of the present invention is to provide for an improved valve for tubeless tires which is easy to handle.

### SUMMARY OF THE INVENTION

The above object, as well as further aims and objects described herein, are achieved by a valve for tubeless tires comprising: a valve body having a distal open end, a proximal open end, an internal channel extending between the distal open end and the proximal open end, and a valve seat at the proximal open end; and a valve stem extending slidingly through the internal channel in the assembled state of the valve, the valve stem comprising a stem head at a valve stem distal end, a valve plug at a valve stem proximal end and cooperating with the valve seat to close the valve under the effect of pressure within a tire, and a valve stem shaft extending between the valve stem distal end and the valve stem proximal end, wherein the stem head is enlarged as compared to the valve stem shaft and the valve plug is enlarged as compared to the valve stem shaft, wherein both the stem head and the valve plug are sized such as not to be insertable into the internal channel, wherein the valve stem shaft is devised with an axial length such that the valve stem shaft is held slidingly with an axial play in the internal channel between the distal open end and the proximal open end and is prevented from being separated from the valve body in the assembled state of the valve, and wherein the stem head is free of threads. Preferably, the whole valve stem is free of threads.

Advantageous aspects of the present invention are defined in the dependent claims 2 to 12.

The present invention also provides for methods for assembling a valve for tubeless tires as defined in claims 13 to 15.

The features and advantages of the present invention will become clearer from the following detailed description of the preferred embodiment thereof, made with reference to the attached drawings.

### DESCRIPTION OF THE DRAWINGS

Figure 1 is a perspective view generally showing the basic components of a valve for tubeless tires according to the present invention;
Figure 2 is a perspective view of the valve for tubeless tires of Figure 1 in an assembled state;
Figure 3 is a perspective view of the valve for tubeless tires of Figure 1 in a partially assembled state with a valve cap separated from the remainder of the valve;
Figure 4 is a perspective view of a valve stem of the valve according to the invention in a first advantageous embodiment and in a disassembled state;
Figure 5 is a perspective view of a valve stem of the valve according to the invention in a variation of the first advantageous embodiment and in a disassembled state;
Figure 6 is a perspective view of the valve stem of Figures 4 and 5 in an assembled state or formed in one piece;
Figure 7 is a partial cross-sectional view of the valve according to the invention in an assembled state and mounted to a tubeless tire, wherein the cross-section is seen along a plane passing through the longitudinal axis of the valve;
Figure 8 is an enlarged view showing the valve of Figure 7 in a full cross-sectional view, the valve being in a closed state;
Figure 9 is an enlarged view showing the valve of Figure 7 in a full cross-sectional view, the valve being in an open state; and
Figure 10 is the cross-sectional view of Figure 9 rotated by 90°.

### DETAILED DESCRIPTION OF THE PREFERRD EMBODIMENTS

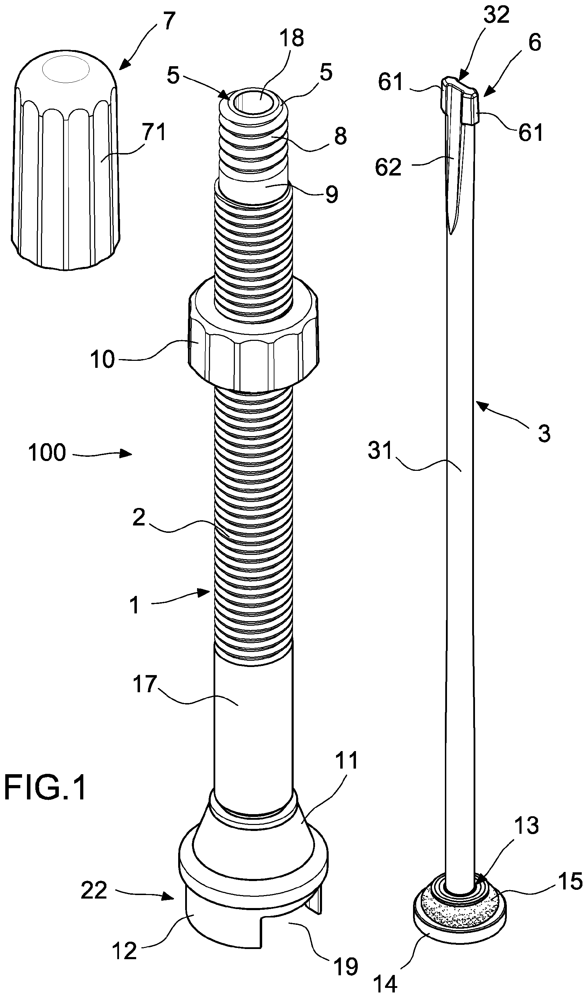

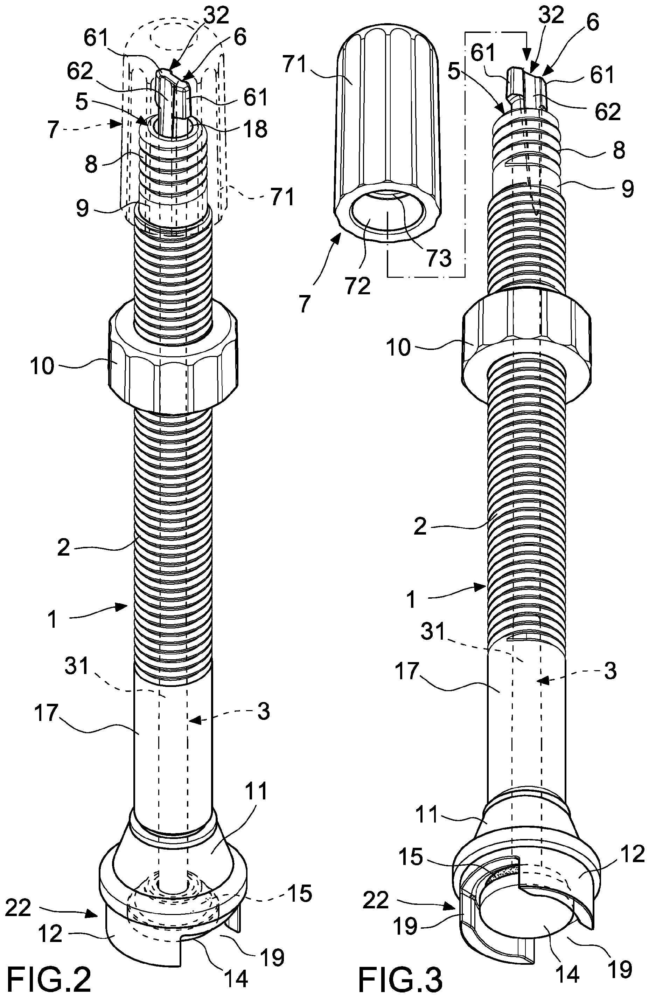

In the following, the present invention will be described in detail in connection with the currently preferred embodiments thereof and with reference to the appended Figures 1 to 10. The teachings are applicable to all types of tubeless tires, such as tubeless tires for bicycles, motorbikes, cars or other types of vehicles.

With reference to Figure 1 a valve 100 for tubeless tires is shown. The valve 100 includes as major parts a valve body 1, a valve stem 3, and a valve cap 7.

As shown for instance in Figures 1 to 10, the valve body 1 has a distal open end 5, a proximal open end 22, an internal channel 18 extending between the distal open end 5 and the proximal open end 22, and a valve seat 12 at the proximal open end 22.

As used herein, the term "distal end" is intended to designate a position remote from a tire 41 in the mounted state of the valve 100 whereas the term "proximal end" is intended to designate a position close to the tire 41 in the mounted state of the valve 100. Nevertheless, to the extent that the invention is claimed independently of the tire, the "distal end" may be also designated as "first end" and the "proximal end" may be also designated as "second end", the "first end" being opposite to the "second end".

As is further best shown in Figures 1 and 4 to 10, the valve stem 3 is extending slidingly through the internal channel 18 of the valve body 1 in the assembled state of the valve 100. The valve stem 3 comprises a stem head 6 at a valve stem distal end 32, a valve plug 14 at a valve stem proximal end 13 and cooperating with the valve seat 12 to close the valve 100 under the effect of pressure within a tire 41, and a valve stem shaft 31 extending between the valve stem distal end 32 and the valve stem proximal end 13.

According to the invention, the stem head 6 is enlarged as compared to the valve stem shaft 31 and the valve plug 14 is enlarged as compared to the valve stem shaft 31.

Furthermore, according to the invention, both the stem head 6 and the valve plug 14 are sized such as not to be insertable into the internal channel 18 of the valve body. In other words, the valve stem 3 is held in the internal channel 18 between the distal open end 5 and the proximal open end 22 and is prevented from being separated from the valve body 1 in the assembled state of the valve 100. The internal pressure within the tire 41 closes the valve 100 by pressing the valve plug 14 against the valve seat 12 while the valve stem 3 is prevented from being pushed into the tire by the stem head 6. Accordingly, advantageously, a valve cap 7, which will be discussed hereinafter, does not need to engage the stem head 6 and the stem head 6 can be manufactured free of threads or other engagement means with the valve cap 7. Preferably, the whole valve stem is free of threads.

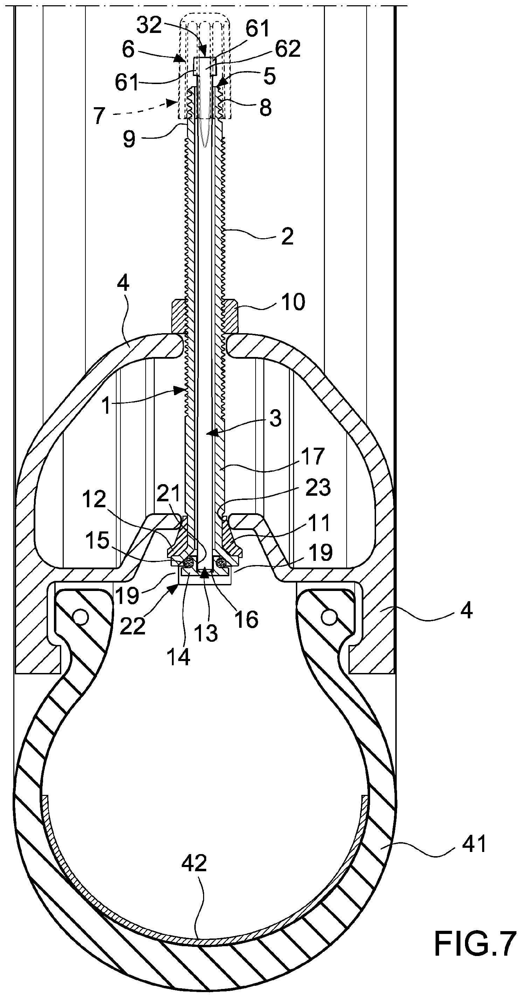

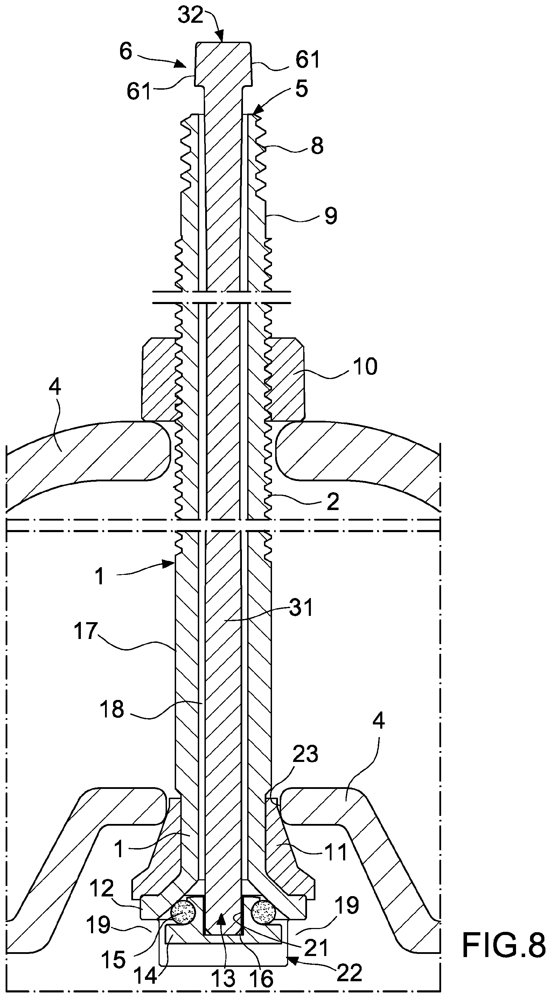

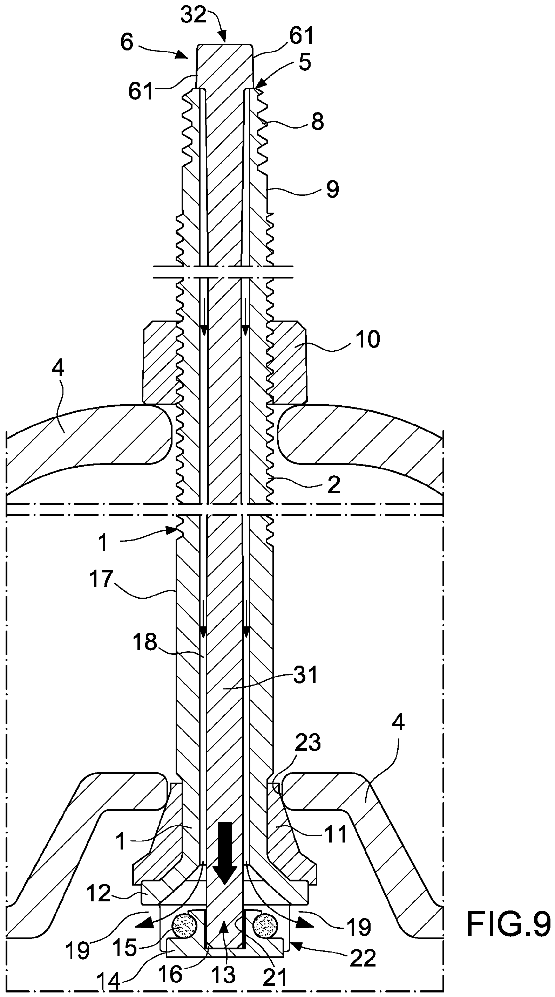

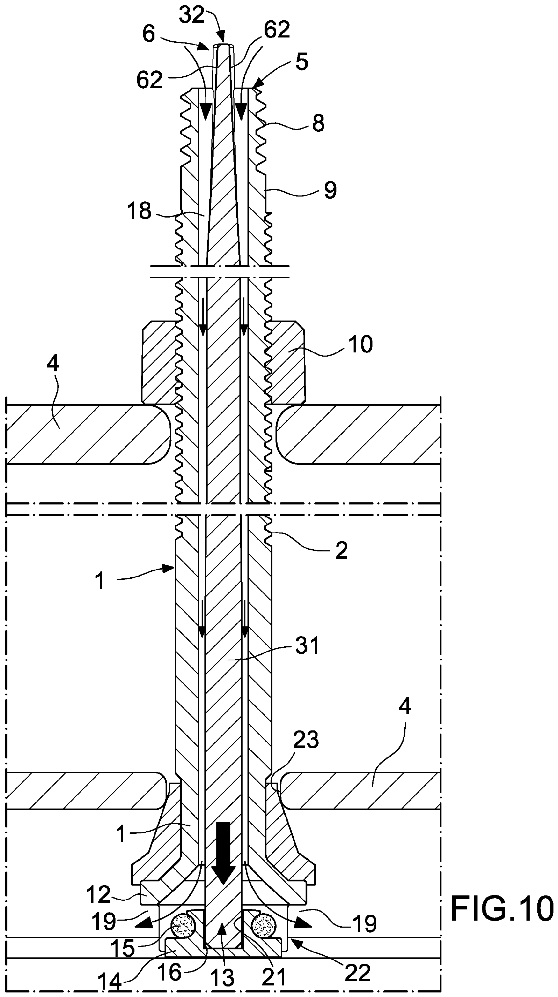

Moreover, according to the invention, the valve stem shaft 31 is devised with an axial length such that the valve stem shaft 31 is held slidingly with an axial play in the internal channel 18 of the valve body 1 between the distal open end 5 and the proximal open end 22. The axial play of the stem shaft 31 (which is equal to axial play of the valve stem 3 in the valve body 1) allows the valve stem 3 to be actuated within the valve body 1 from a valve closing position as shown in Figures 9 and 10 to a valve opening position as shown in Figures 7 and 8.

In the valve closing position, the valve plug 14 is pressed by the pressure inside the tire 41 against the valve seat 12 such that air is prevented from escaping from the tire 41. In the valve opening position, the valve plug 14 is separated from the valve seat 12 by the pressurized air provided by an external source (not shown) and the air can flow into the tire 41, as shown by the arrows of Figures 9 and 10. The valve opening position may also be provided by depressing the stem head 6, for instance manually, and allowing pressurized air to exit the tire 41, for instance in order to deflate the tire 41.

As shown in Figures 7 and 8, the stem head 6 extends in the valve closing position beyond the distal open end 5 of the valve body 1 by a length equal to the axial play, such as to allow the depression of the valve stem 3 into the valve closing position shown in Figures 9 and 10. As shown in Figures 9 and 10 depression of the valve stem 3 is limited by the interaction between the stem head 6 and the distal open end 5 of the valve body 1.

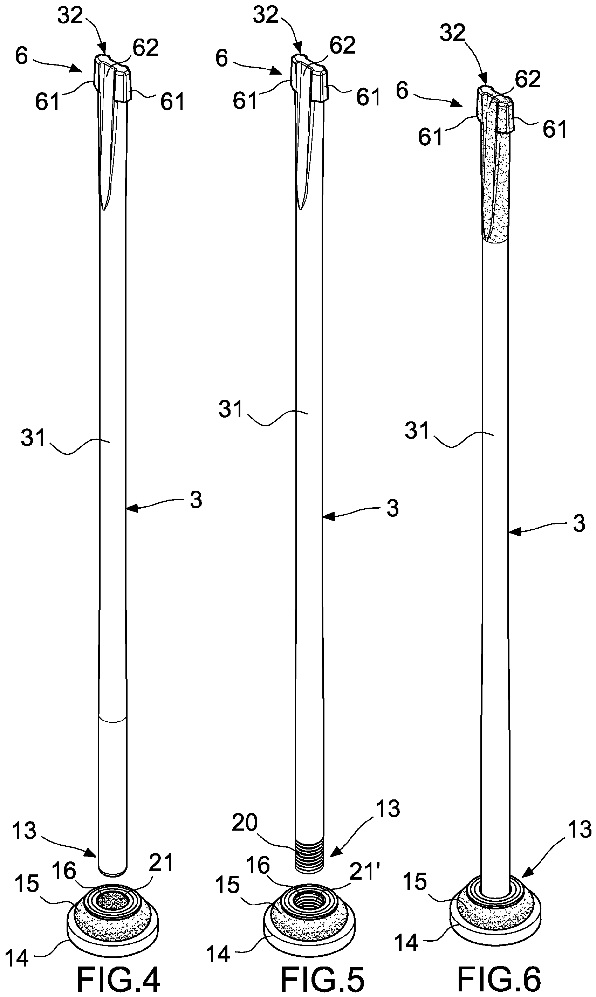

According to a first advantageous embodiment of the present invention, as shown with particular reference to Figures 4 and 5, the valve stem 3 may be made of two separate parts prior to its assembly such as to allow the assembly of the valve stem 3 as a unit in the internal channel 18 of the valve body 1. Preferably, the valve plug 14 may be separate from the valve stem shaft 31 prior to forming the unit in the valve body 1 and further preferably the valve plug 14 may be glued to the valve stem shaft 31 to form the unit in the valve body 1, as shown in Figure 4, or the valve plug 14 may be screwed to the valve stem shaft 31 to form the unit in the valve body 1, as shown in Fig. 5.

In this first advantageous embodiment, the valve stem shaft 31 with the stem head 6 may be inserted into the internal channel 18 of the valve body 1 from the distal open end 5 of the valve body 1 and the valve plug 14 may be placed at the proximal open end 22 of the valve body 1 adjacent to the valve seat 12 of the valve body. The assembly of the valve stem 3 in the internal channel 18 of the valve body 1 is facilitated by the axial play of the valve stem shaft 31 in the internal channel 18 of the valve body 1 (which as has been mentioned is equal to the axial play of the valve stem 3 in the valve body 1), inasmuch as the valve stem shaft 31 may be extended beyond the proximal open end 22 of the valve body 1 and glued to the valve plug 14 (Figure 4) or screwed to the valve plug 14 (Figure 5).

The person skilled in the art will also appreciate that a valve stem made in two parts may be glued or screwed for the purpose of assembly in the valve body 1 as a unit in other positions, for instance at the stem head 6 or in any position on the valve stem shaft 31. Nevertheless, currently, glueing the valve stem shaft 31 to the valve plug 14 (Figure 4) is understood to be a preferred solution in terms of manufacturing the valve 100 and/or in terms of stability thereof.

According to a second advantageous embodiment, at least the stem head 6 of the valve stem 3 may be made of a plastically deformable material such as to allow the assembly of the valve stem 3 in the internal channel 18 of the valve body 1 by passing the stem head 6 through the proximal open end 22 towards the distal open end 5. The plastically deformable material of the stem head 6 may be plastically deformable from a first state in which it can pass through the proximal open end 22 and the distal open end 5 of the valve body 1 to a second state in which it is prevented from passing through the distal open end 5. In this second embodiment, further preferably, the valve stem 3 may be made in one piece, as shown in Figure 6.

According to the second embodiment, the valve stem 3 may be made of a composite material. The stem head 6 may be plastically deformed in a heated mold (not shown) or cold forged by squeezing the stem head 6 without heating it after the stem head 6 has passed the distal open end 5.

According to a third advantageous embodiment, at least the stem head 6 of the valve stem 3 may be made of an elastically deformable material such as to allow the assembly of the valve stem 3 in the internal channel 18 of the valve body 1 by passing the stem head 6 through the proximal open end 22 towards the distal open end 5, wherein the elastically deformable material of the stem head 6 is elastically deformable to such an extent that it can pass through the proximal open end 22 and the distal open end 5. In this third embodiment, further preferably, the valve stem 3 may be made in one piece, as shown in Figure 6.

In a further advantageous variation, the stem head 6 may be formed by over-molding on the valve stem shaft 31 after passing the valve stem shaft 31 from the proximal open end 22 through the internal channel 18 towards the distal open end 5. According to this advantageous variation, the valve stem shaft 31 may be placed into a mold and the stem head 6 may be over-molded.

According to a further advantageous aspect of the present invention, as best seen in Figures 4 to 6, the valve stem 3 may comprise at least one flow channel 62 extending in the valve stem 3 from the valve stem distal end 32. The at least one flow channel 62 may be devised so as to enhance the flow of air both into and out of the valve 100. Thus, the air flow into and out of the valve 100 is less restricted and the inflation and deflation of the tire 41 are facilitated.

Further preferably, the valve stem 3 may comprise two flow channels 62 extending in a diametrically opposite manner in the valve stem 3. The latter aspect further facilitates the air flow into and out of the valve 100.

According to advantageous aspects of the invention, the valve stem shaft 31 may be substantially cylindrical, in particular substantially circular cylindrical.

As best shown in Figures 4 to 6, the stem head 6 may have at least one enlarged section 61 extending radially with respect to the valve stem shaft 31. Preferably, the stem head 6 may have two enlarged sections 61 extending radially in diametrically opposed directions with respect to the valve stem shaft 31.

It has been found that particular advantages are achieved if the at least one or both flow channels 62 extend through the full axial length of the stem head 6, as the air flow into and out of the valve 100 is facilitated. The air flow into and out of the valve 100 may be further advantageously enhanced if the at least one or both flow channels 62 extend through the partial axial length of the valve stem shaft 31.

The valve 100 may further comprise a valve cap 7 with an internal cap opening 72, such that the valve cap 7 may be firmly attachable at the internal cap opening 72 to the distal open end 5 of the valve body 1 with a clearance with respect to the stem head 6. Advantageously, the clearance is made possible as the valve cap 7 is not attached to the stem head 6, as is the case in the prior art. Rather, as the valve stem 3 is held in the assembled state of the valve in the internal channel 18 of the valve body 1 between the distal open end 5 and the proximal open end 22 and is prevented from being separated from the valve body 1, the stem head 6 may be manufactured free of threads.

Preferably, the valve cap 7 may be provided externally with cap striations 71 which facilitate its handling.

According to further advantageous aspects of the present invention, the valve body 1 may be substantially circular cylindrical. In such advantageous aspects, the valve body may comprise at the distal open end 5 a first thread 8. The valve cap 7 may be substantially circular cylindrical and may have an internal cap thread 73 for threadingly engaging the first thread 8 of the valve body 1. However, according to a variation of the present invention, the valve body 1 may have other shapes at least adjacent to its distal open end 5, such as a cylinder with an elliptical cross section, and in this case a valve cap 7 can be fixed to the valve body 1 for instance by clamping.

The valve 100 may further advantageously comprise a nut 10 for threadingly engaging a second thread 2 of the valve body 1, the nut 10 being axially displaceable along the second thread 2 of the valve body 1 towards the proximal open end 22 of the valve body 1 to clamp, as shown in Figures 7 to 10, a tire rim 4 between the nut 10 and the valve seat 12. Such tire rims are well-known to the person skilled in the art and will not be described in detail in the current specification. The tire rim 4 may be provided in a known manner with a rim bead hook and the tire 41 may be provided in a known manner with a tire bead hook for connection to the tire rim 4. Nevertheless, hookless connections between the tire 41 and the tire rim 4 may be envisaged by the person skilled in the art. Furthermore, as shown in Figure 7, the tire 41 may be provided with a sealant 42, as is well-known to the person skilled in the art.

According to the latter advantageous aspect, preferably a first non-threaded section 9 may be provided on the valve body 1 in order to separate the first thread 8 of the valve body 1 from the second thread 2 of the valve body 1 and/or preferably a second non-threaded section 17 may be provided on the valve body 1 to separate the second thread 2 of the valve body 1 from the valve seat 12. In this way excessive threading with subsequent damage of the tire rim 4 and/or tire 41 can be contained.

Advantageously, the valve seat 12 may be radially extended with respect to the remainder of the valve body 1. Further advantageously, as best shown in Figures 7 to 10, the valve 100 may further comprise a seal 11, the seal 11 surrounding the valve body 1 close to the proximal open end 22 of the valve body 1 and contacting the valve seat 12 so as to reliably seal the valve body 1 to a valve opening 23 in the tire rim 4. Further preferably, the seal 11 is a rubber seal.

According to additional preferred aspects of the present invention, the valve plug 14 of the valve stem 3 may comprise a plug sealing 15 surrounding externally the valve plug 14 and cooperating with the valve seat 12 of the valve body 1 so as to more reliably seal the valve plug 14 to the valve seat 12 under the effect of pressure within a tire 41.

According to additional advantageous aspects of the present invention, the valve seat 12 may comprise at least one air flow opening 19 provided as a cutout in the valve seat 12, the at least one air flow opening 19 being advantageously devised so as to enhance the flow of air both into and out of the valve 100. Further preferably, the valve seat 12 may comprise two air flow openings 19 extending in a diametrically opposite manner in the valve seat 12. The latter feature further improves the flow of air.

With particular reference to Figures 4 and 5, the valve plug 14 may advantageously comprise a valve plug opening 16 devised to fixedly receive the valve stem shaft 31 according to the first advantageous embodiment discussed hereinabove.

According to one variation of the first advantageous embodiment, as discussed, the valve plug opening 16 may be provided with a glue 21 for permanently connecting the valve stem shaft 31 to the valve plug 14.

According to another variation of the first advantageous embodiment, as has been discussed, the valve plug opening 16 may be provided with a plug opening thread 21' and the valve stem shaft 31 may be provided with a valve stem thread 20 at the valve stem proximal end 13 such as to separably connect the valve stem shaft 31 to the valve plug 14.

According to a particularly advantageous aspect of the present invention, the valve body 1 and/or the valve stem 3 may be made of a composite material. By avoiding materials like aluminum or other metal, as was the case in the prior art, the valve 100 as a whole is made very light. Further, the manufacturing of the valve 100 is rendered simpler and manufacturing can be performed at lower costs.

Preferably, the composite material is a polymeric material reinforced with carbon fiber or with glass fiber or with aramid fiber (also known under the tradename of Kevlar). Also polymeric materials reinforced with mixtures comprising carbon fibers, glass fibers and/or aramid fibers are envisaged. In other words, the reinforcing mixtures for the polymeric material may be aramid fibers and glass fibers and carbon fibers, or just carbon fibers and glass fibers or glass fibers and aramid fibers etc. Mixtures of reinforcing material for the polymeric material including carbon fibers and glass fibers are advantageous as the costs are lowered and the resulting valve material is strong. Mixtures of reinforcing material for the polymeric material including aramid fibers and carbon fibers are more expensive but also more resistant to cracking because the aramid fibers are more flexible and resist certain types of forces better than the carbon fibers. Glass fibers are the weakest of the mixing fibers and are more brittle; however, mixtures of reinforcing material for the polymeric material including glass fibers and aramid fibers have an increased elastic resistance while still being cheaper than carbon fibers only. Glass fibers and the polymeric material mixtures can be advantageously transparent. Glass fiber and aramid fiber mixtures with polymeric material can be yellow. However, carbon fibers and polymeric material mixtures will always be black/anthracite because carbon fibers are of such a color. Glass fibers are transparent, and aramid fibers are yellowish.

In one advantageous embodiment, the valve body 1 is made of a mixture of carbon fibers and a polymeric material such as to have a good strength and the valve stem 3 is made of a mixture of aramid fibers and a polymeric material to better resist bending forces which may be exerted on the stem head 6, for instance, during the pumping / inflating of the tire 41. In fact, during the inflating of the tire 41, the stem head 6 is pushed down and bent in dependence on the pump type. For instance, if a manual hand pump is used, one has to use one hand to hold the pump, and pumping is performed with the other hand; then one has to keep pushing laterally the pump against the whole valve and mostly the stem head 6. When one uses a so-called "floor pump" then this problem is less severe, as the head of the pump, which is on a long hose, is attached to the valve and the pump that is sitting next to a bike; hence there are almost no forces acting on the valve apart from pressure of the air.

Advantageously, the polymeric material is chosen from Pa6, Pa66, PC, PVC, POM, ABS, PE, PP, TPR, TPU, PMMA, HDPE, LDPE or Nylon and combinations thereof.

According to the invention, a method is provided for assembling a valve 100 for tubeless tires, in particular the valve 100 as described hereinabove, comprising the following steps:
providing a valve body 1 having a distal open end 5, a proximal open end 22, an internal channel 18 extending between the distal open end 5 and the proximal open end 22, and a valve seat 12 at the proximal open end 22;
providing a two-part valve stem 3 comprising a stem head 6 at a valve stem distal end 32, a valve plug 14 at a valve stem proximal end 13, and a valve stem shaft 31 extending between the valve stem distal end 32 and the valve stem proximal end 13, wherein the stem head 6 is enlarged as compared to the valve stem shaft 31 and the valve plug 14 is enlarged as compared to the valve stem shaft 31, wherein both the stem head 6 and the valve plug 14 are sized such as not to be insertable into the internal channel 18, wherein the two-part valve stem 3 comprises a first stem part comprising the valve plug 14 and a second stem part comprising the stem head 6, wherein the first stem part is separate from the second stem part;
inserting the first stem part into the internal channel 18 from the proximal open end 22 of the valve body 1 and inserting the second stem part into the internal channel 18 from the distal open end 5 of the valve body 1, wherein preferably the second stem part further comprises the valve stem shaft 31; and
assembling the first stem part with the second stem part preferably by glueing or threading, such that the valve stem 3 is held slidingly with axial play in the internal channel 18 between the distal open end 5 and the proximal open end 22 and is prevented from being separated from the valve body 1.

In a first alternative, according to the invention, a method is provided for assembling a valve 100 for tubeless tires, in particular the valve 100 as described hereinabove, comprising the following steps:
providing a valve body 1 having a distal open end 5, a proximal open end 22, an internal channel 18 extending between the distal open end 5 and the proximal open end 22, and a valve seat 12 at the proximal open end 22;
providing a valve stem 3 comprising a stem head 6 at a valve stem distal end 32, a valve plug 14 at a valve stem proximal end 13, and a valve stem shaft 31 extending between the valve stem distal end 32 and the valve stem proximal end 13, wherein the stem head 6 is made of a plastically deformable material and is sized such that it can be inserted through the proximal open end 22, the internal channel 18 and the distal open end 5 of the valve body 1, and wherein the valve plug 14 is enlarged as compared to the valve stem shaft 31 and the proximal open end 22;
inserting the valve stem 3 into the internal channel 18 from the proximal open end 22 of the valve body 1 such that the stem head 6 fully exits the internal channel 18 at the distal open end 5 of the valve body 1; and
plastically deforming the stem head 6 of the valve stem 3, such that the valve stem 3 is held slidingly with axial play in the internal channel 18 between the distal open end 5 and the proximal open end 22 and is prevented from being separated from the valve body 1.

In a second alternative, according to the invention, a method is provided for assembling a valve 100 for tubeless tires, in particular the valve 100 as described hereinabove, comprising the following steps:
providing a valve body 1 having a distal open end 5, a proximal open end 22, an internal channel 18 extending between the distal open end 5 and the proximal open end 22, and a valve seat 12 at the proximal open end 22;
providing a valve stem 3 comprising a stem head 6 at a valve stem distal end 32, a valve plug 14 at a valve stem proximal end 13, and a valve stem shaft 31 extending between the valve stem distal end 32 and the valve stem proximal end 13, wherein the stem head 6 is enlarged as compared to the valve stem shaft 31 and the valve plug 14 is enlarged as compared to the valve stem shaft 31, wherein both the stem head 6 and the valve plug 14 are sized such as not to be insertable into the internal channel 18, and wherein the stem head 6 is made of an elastically deformable material;
inserting the valve stem 3 into the internal channel 18 from the proximal open end 22 of the valve body 1 by elastically deforming the stem head 6 such that the stem head 6 fully exits the internal channel 18 at the distal open end 5 of the valve body 1; and
returning the stem head 6 of the valve stem 3 to its initial shape, such that the valve stem 3 is held slidingly with axial play in the internal channel 18 between the distal open end 5 and the proximal open end 22 and is prevented from being separated from the valve body 1.

In the foregoing method the stem head 6 may be devised to be free of threads. Furthermore in the first and second alternative methods, the valve stem may be devised as a unit, particularly as a one piece element.

While the invention has been described herein with respect to tubeless tires attached to a rim, its benefits are applicable generally to tubeless tires for vehicles such as motorbikes, cars, bicycles and the like.

The disclosure of the present invention includes all modifications and equivalents of the subject matter recited in the claims appended hereto as permitted by applicable law. Moreover, any combination of the elements described above in all possible variations thereof is encompassed by the disclosure unless indicated otherwise herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realize that the disclosure may be embodied in other specific forms without departing from the disclosure or essential characteristics thereof. The foregoing embodiments are therefore in every respect to be considered illustrative rather than limiting to the disclosure described herein. The scope of the invention is thus indicated by the appended claims, rather than the foregoing description, and all changes that come within the meaning and range of equivalence of the claims are therefore intended to be embraced therein.

### LIST OF REFERENCE NUMERALS

- 1: valve body
- 2: second thread (of the valve body for engagement with nut)
- 3: valve stem
- 31: valve stem shaft
- 32: valve stem distal end
- 4: tire rim
- 41: tubeless tire
- 42: sealant of tubeless tire
- 5: distal open end (of the valve body)
- 6: stem head (of the valve stem)
- 61: enlarged section (of the stem head)
- 62: flow channel
- 7: valve cap
- 71: cap striations
- 72: internal cap opening
- 73: cap thread
- 8: first thread (of the valve body)
- 9: first non-threaded section (of the valve body)
- 10: nut
- 11: seal (rubber seal to seal the opening in the tire rim when the valve is inserted from the inside of the tire rim)
- 12: valve seat (of the valve body)
- 13: valve stem proximal end
- 14: valve plug
- 15: plug sealing (of the valve plug)
- 16: valve plug opening
- 17: second non-threaded section (of the valve body)
- 18: internal channel (of the valve body)
- 19: air flow opening (of the valve seat)
- 20: valve stem thread (at the proximal end of the valve stem)
- 21: glue
- 21': plug opening thread (of the valve plug)
- 22: proximal open end (of the valve body)
- 23: valve opening (in the tire rim)

## Claims

1. A valve (100) for tubeless tires comprising:
a valve body (1) having a distal open end (5), a proximal open end (22), an internal channel (18) extending between the distal open end (5) and the proximal open end (22), and a valve seat (12) at the proximal open end (22); and
a valve stem (3) extending slidingly through the internal channel (18) in the assembled state of the valve (100), the valve stem (3) comprising a stem head (6) at a valve stem distal end (32), a valve plug (14) at a valve stem proximal end (13) and cooperating with the valve seat (12) to close the valve (100) under the effect of pressure within a tire (41), and a valve stem shaft (31) extending between the valve stem distal end (32) and the valve stem proximal end (13),
wherein the stem head (6) is enlarged as compared to the valve stem shaft (31) and the valve plug (14) is enlarged as compared to the valve stem shaft (31), wherein both the stem head (6) and the valve plug (14) are sized such as not to be insertable into the internal channel (18), wherein the valve stem shaft (31) is devised with an axial length, such that the valve stem shaft (31) is held slidingly with an axial play in the internal channel (18) between the distal open end (5) and the proximal open end (22) and is prevented from being separated from the valve body (1) in the assembled state of the valve (100), and wherein the stem head (6) is free of threads.

2. The valve (100) according to claim 1, wherein the valve stem (3) is made of two separate parts prior to its assembly such as to allow the assembly of the valve stem (3) as a unit in the internal channel (18) of the valve body (1), wherein preferably the valve plug (14) is separate from the valve stem shaft (31) prior to forming of the unit in the valve body (1), and wherein further preferably the valve plug (14) is glued to the valve stem shaft (31) to form the unit in the valve body (1), or
wherein at least the stem head (6) of the valve stem (3) is made of a plastically deformable material such as to allow the assembly of the valve stem (3) in the internal channel (18) of the valve body (1) by passing the stem head (6) through the proximal open end (22) towards the distal open end (5), wherein the plastically deformable material of the stem head (6) is plastically deformable from a first state in which it can pass through the proximal open end (22) and the distal open end (5) to a second state in which it is prevented from passing through the distal open end (5) and wherein preferably the valve stem (3) is made in one piece; or
wherein at least the stem head (6) of the valve stem (3) is made of an elastically deformable material such as to allow the assembly of the valve stem (3) in the internal channel (18) of the valve body (1) by passing the stem head (6) through the proximal open end (22) towards the distal open end (5), wherein the elastically deformable material of the stem head (6) is elastically deformable so that it can pass through the proximal open end (22) and the distal open end (5) and wherein preferably the valve stem (3) is made in one piece.

3. The valve (100) according to claims 1 or 2, wherein the valve stem (3) comprises at least one flow channel (62) extending in the valve stem (3) from the valve stem distal end (32), the at least one flow channel (62) being devised so as to enhance the flow of air both into and out of the valve (100), wherein preferably the valve stem (3) comprises two flow channels (62) extending in a diametrically opposite manner in the valve stem (3).

4. The valve (100) according to one or more of the preceding claims, wherein the valve stem shaft (31) is substantially cylindrical, in particular substantially circular cylindrical, and wherein the stem head (6) has at least one enlarged section (61) extending radially with respect to the valve stem shaft (31), wherein preferably the stem head (6) has two enlarged sections (61) extending radially in diametrically opposed directions with respect to the valve stem shaft (31).

5. The valve (100) according to claims 3 or 4, wherein the at least one flow channel (62) extends through the full axial length of the stem head (6) and/or wherein the at least one flow channel (62) extends through the partial axial length of the valve stem shaft (31).

6. The valve (100) according to one or more of the preceding claims, wherein the valve (100) further comprises a valve cap (7) with an internal cap opening (72), wherein the valve cap (7) is firmly attachable at the internal cap opening (72) to the distal open end (5) of the valve body (1) with a clearance with respect to the stem head (6), wherein preferably the valve cap (7) is provided externally with cap striations (71).

7. The valve (100) according to one or more of the preceding claims, wherein the valve body (1) is substantially circular cylindrical.

8. The valve (100) according to claims 6 and 7, wherein the valve body (1) comprises at the distal open end (5) a first thread (8), and wherein the valve cap (7) is substantially circular cylindrical and has an internal cap thread (73) for threadingly engaging the first thread (8) of the valve body (1).

9. The valve (100) according to claim 7 or 8, wherein the valve (100) further comprises a nut (10) for threadingly engaging a second thread (2) of the valve body (1), the nut (10) being axially displaceable along the second thread (2) of the valve body (1) towards the proximal open end (22) of the valve body (1) to clamp a tire rim (4) between the nut (10) and the valve seat (12),
wherein preferably a first non-threaded section (9) is provided on the valve body (1) in order to separate the first thread (8) of the valve body (1) from the second thread (2) of the valve body (1) and/or wherein preferably a second non-threaded section (17) is provided on the valve body (1) to separate the second thread (2) of the valve body (1) from the valve seat (12).

10. The valve (100) according to one or more of the preceding claims, wherein the valve seat (12) is radially extended with respect to the remainder of the valve body (1) and wherein the valve (100) further comprises a seal (11), the seal (11) surrounding the valve body (1) close to the proximal open end (22) of the valve body (1) and contacting the valve seat (12) so as to seal the valve body (1) to a valve opening (23) in a tire rim (4), wherein preferably the seal (11) is a rubber seal; and/or
wherein the valve plug (14) of the valve stem (3) comprises a plug sealing (15) surrounding externally the valve plug (14) and cooperating with the valve seat (12) of the valve body (1) so as to seal the valve plug (14) to the valve seat (12) under the effect of pressure within a tire (41); and/or
wherein the valve seat (12) comprises at least one air flow opening (19) provided as a cutout in the valve seat (12), the at least one air flow opening (19) being devised so as to enhance the flow of air both into and out of the valve (100), wherein preferably the valve seat (12) comprises two air flow openings (19) extending in a diametrically opposite manner in the valve seat (12).

11. The valve (100) according to one or more of the preceding claims, wherein the valve plug (14) comprises a valve plug opening (16) devised to fixedly receive the valve stem shaft (31),
wherein preferably the valve plug opening (16) is provided with a glue (21) for permanently connecting the valve stem shaft (31) to the valve plug (14); or
wherein preferably the valve plug opening (16) is provided with a plug opening thread (21') and the valve stem shaft (31) is provided with a valve stem thread (20) at the valve stem proximal end (13) such as to separably connect the valve stem shaft (31) to the valve plug (14).

12. The valve (100) according to one or more of the preceding claims, wherein the valve body (1) and/or the valve stem (3) are made of a composite material, preferably a polymer material reinforced with carbon fibers or with glass fibers or with aramid fibers or a polymer material reinforced with mixtures comprising carbon fibers, glass fibers and/or aramid fibers, wherein further preferably the valve body (1) is made of a polymer material reinforced with carbon fibers and the valve stem (3) is made of a polymer material reinforced with aramid fibers.

13. A method for assembling a valve (100) for tubeless tires, in particular the valve (100) according to one or more of claims 1 to 12, comprising:
providing a valve body (1) having a distal open end (5), a proximal open end (22), an internal channel (18) extending between the distal open end (5) and the proximal open end (22), and a valve seat (12) at the proximal open end (22);
providing a two-part valve stem (3) comprising a stem head (6) at a valve stem distal end (32), a valve plug (14) at a valve stem proximal end (13), and a valve stem shaft (31) extending between the valve stem distal end (32) and the valve stem proximal end (13), wherein the stem head (6) is enlarged as compared to the valve stem shaft (31) and the valve plug (14) is enlarged as compared to the valve stem shaft (31), wherein both the stem head (6) and the valve plug (14) are sized such as not to be insertable into the internal channel (18), wherein the two-part valve stem (3) comprises a first stem part comprising the valve plug (14) and a second stem part comprises the stem head (6), wherein the first stem part is separate from the second stem part;
inserting the first stem part into the internal channel (18) from the proximal open end (22) of the valve body (1) and inserting the second stem part into the internal channel (18) from the distal open end (5) of the valve body (1), wherein preferably the second stem part further comprises the valve stem shaft (31) and the stem head (6); and
assembling the first part of the valve stem (3) with the second part of the valve stem (3), preferably by glueing or threading, such that the valve stem (3) is held slidingly with axial play in the internal channel (18) between the distal open end (5) and the proximal open end (22) and is prevented from being separated from the valve body (1).

14. A method for assembling a valve (100) for tubeless tires, in particular the valve (100) according to one or more of claims 1 to 12, comprising:
providing a valve body (1) having a distal open end (5), a proximal open end (22), an internal channel (18) extending between the distal open end (5) and the proximal open end (22), and a valve seat (12) at the proximal open end (22);
providing a valve stem (3) comprising a stem head (6) at a valve stem distal end (32), a valve plug (14) at a valve stem proximal end (13) and a valve stem shaft (31) extending between the valve stem distal end (32) and the valve stem proximal end (13), wherein the stem head (6) is made of a plastically deformable material and is sized such that it can be inserted through the proximal open end (22), the internal channel (18) and the distal open end (5) of the valve body (1), and the valve plug (14) is enlarged as compared to the valve stem shaft (31) and the proximal open end (22);
inserting the valve stem (3) into the internal channel (18) from the proximal open end (22) of the valve body (1) such that the stem head (6) fully exits the internal channel (18) at the distal open end (5) of the valve body (1); and
plastically deforming the stem head (6) of the valve stem (3), such that the valve stem (3) is held slidingly with axial play in the internal channel (18) between the distal open end (5) and the proximal open end (22) and is prevented from being separated from the valve body (1).

15. A method for assembling a valve (100) for tubeless tires, in particular the valve (100) according to one or more of claims 1 to 12, comprising:
providing a valve body (1) having a distal open end (5), a proximal open end (22), an internal channel (18) extending between the distal open end (5) and the proximal open end (22), and a valve seat (12) at the proximal open end (22);
providing a valve stem (3) comprising a stem head (6) at a valve stem distal end (32), a valve plug (14) at a valve stem proximal end (13) and a valve stem shaft (31) extending between the valve stem distal end (32) and the valve stem proximal end (13), wherein the stem head (6) is enlarged as compared to the valve stem shaft (31) and the valve plug (14) is enlarged as compared to the valve stem shaft (31), wherein both the stem head (6) and the valve plug (14) are sized such as not to be insertable into the internal channel (18), and wherein the stem head (6) is made of an elastically deformable material;
inserting the valve stem (3) into the internal channel (18) from the proximal open end (22) of the valve body (1) by elastically deforming the stem head (6) such that the stem head (6) fully exits the internal channel (18) at the distal open end (5) of the valve body (1); and
returning the stem head (6) of the valve stem (3) to its initial shape, such that the valve stem (3) is held slidingly with axial play in the internal channel (18) between the distal open end (5) and the proximal open end (22) and is prevented from being separated from the valve body (1).
